# EUROPEAN PATENT SPECIFICATION

(11) **EP 3 662 428 B1**
(45) Date of publication and mention of the grant of the patent: **07.08.2024**
(21) Application number: 18735075.6
(22) Date of filing: 07.06.2018
(51) Int. Cl.: G06Q 20/22, G06Q 20/36

(54) **CONDUCTING TRANSACTIONS WITH MULTIPLE PAYMENT SERVICE PROVIDERS**
DURCHFÜHRUNG VON TRANSAKTIONEN MIT MEHREREN ZAHLUNGSDIENSTANBIETERN
RÉALISATION DE TRANSACTIONS AVEC DES FOURNISSEURS DE SERVICE DE PAIEMENT MULTIPLES

(30) Priority: 25.08.2017 US 201762550297 P
(43) Date of publication of application: 10.06.2020
(73) Proprietor: Google LLC, Mountain View, CA 94043 (US)
(72) Inventor: KHANNA, Heman, Hyderabad 500084 (IN); CHATTERJI, Animesh, Hyderabad 500084 (IN); KUTTY, Sujith, Narayanan, Bangalore 560016 (IN); ZHU, David, Wei, Singapore 117371 (SG); LIM, Jeffrey, Tien-huang, Singapore 117371 (SG); KANWAL, Mohit, Singh, Singapore 117371 (SG); GWALANI, Sumit, Kanhaiyalal, Hyderabad 500084 (IN)
(74) Representative: Harden, Henry Simon
(86) International application number: PCT/US2018/036530
(87) International publication number: WO 2019/040150

(56) References cited:
- WO-A1-2017/083961
- WO-A1-2017/115386
- US-A1- 2014 012 704
- US-A1- 2016 132 876
- US-A1- 2017 017 958

## Description

### CROSS-REFERENCE TO RELATED APPLICATIONS

This application claims priority to U.S. Provisional Patent Application No. 62/550,297 filed August 25, 2017, and entitled "Conducting Transactions with Multiple Payment Service Providers."

### TECHNICAL FIELD

The example embodiments described herein provide a unified payment interface that enables multiple payment service providers to conduct transactions. The selection of the payment service provider ("PSP") for the transaction is based on the health of the payment routing mechanism for each PSP.

### BACKGROUND

PSPs allow a user to transfer funds from one financial institution to another financial institution. For example, the PSP allows a user to make a purchase transaction by transferring funds to a financial institution associated with a merchant system or to the merchant system itself. In certain examples, when the user computing device that is being utilized for the transaction receives a request to conduct the transaction, the user computing device obtains a token from a primary PSP.

The token is typically valid for a limited time, such as 30 days. The token may be used as a payment credential for the user's account. The token protects the user account because the token allows transactions to be conducted without the need for user account information. In a conventional system, the token is only usable for transaction conducted with the primary PSP that issued the token.

In a conventional system, the user establishes a user identification ("ID") with the primary PSP. The user ID may be an email address of the user or any other configured "handle." When the user desires to conduct a transaction using the primary PSP, the user may type in the user ID and a password or other verification on a payment interface to initiate a transaction.

In a conventional system, if the user has an account at multiple PSPs, the user would configure different user IDs for each PSP and access fund transfers via multiple user payment interfaces that are each associated with one of the PSPs.

In conventional systems, when a user initiates a transaction, the user must select the user ID associated with a particular PSP to be used for the transaction on the appropriate user payment interface.

US 2014/012704 A1 discloses a computer-implemented method to select a preferred card for a purchase based on a merchant category. In the exemplary method, the computer associates a plurality of financial accounts with an account of a user; associates a merchant category with a financial account associated with the user account; and receives data from a transaction

US 2016/132876 A1 discloses redeeming closed loop payment instruments in wallet account transactions comprising a payment system server configured to associate financial accounts with a payment account of a user, comprising at least one closed loop account.

WO 2017/115386 A1 discloses a multi-account mapping system and method which includes a universal card comprising multiple slots, each slot having an associated multi-digit identifier and being mapped to at least one account, the at least one account is selected from preconfigured types of account; a database that stores the mappings of the slot and the at least one account along with details of the universal card; and an interface module that facilitates access of the at least one account mapped to the universal card.

US 2017/017958 A1 discloses systems, methods, and machine-executable data structures for the processing of data for the secure creation, administration, manipulation, processing, and storage of electronic data useful in the processing of electronic payment transactions and other secure data processes.

WO 2017083961A1 discloses an apparatus for managing smart card transactions including one or more communication interfaces for connecting to processors of vendors, customers and payment server processors and a processor configured to receive details of a transaction from a vendor processor, to transmit the transaction details to a smart card reader identified by the received details, to receive from a smart card within the smart card reader a cryptogram authorizing the transaction, to transfer the details of the transaction and the cryptogram to a payment server processor (PSP) to carry out the transaction, to receive confirmation of the transaction from the PSP through the interface and to transmit confirmation of the transaction to both the vendor processor and a customer processor.

### OVERVIEW

Aspects of the invention are set out in the independent claims. The examples described herein provide a payment interface (unified payment interface) that enables multiple payment service providers to conduct transactions. The unified payment interface is an application, website, or other suitable user interface software that allows a user to initiate transactions, such as a transfer of funds from one financial institution to another. The user registers accounts with multiple PSPs. Each PSP registers the user account with a payment network, or "gateway switch." The switch routes transactions to the appropriate PSP. In particular, the user computing device comprises the payment interface.

In a conventional system, the user must specify which PSP is to be used in a pending transaction. For example, the user must enter the user ID associated with that PSP account to request that the transaction be conducted using the user account at that PSP. The PSP uses the payment network, or other routing mechanisms, to conduct the transfer of funds.

In an example, the user configures one user ID on the unified payment interface and associates multiple PSP accounts with the user ID. For example, the user configures an account at two PSPs. The user only configures one user ID on the unified payment interface and associates both PSP accounts with the user ID. The selection of which PSP account to use in a transaction is made by the unified payment interface. In certain examples, the user registers a user account with each PSP. For example, the user navigates to a website of each PSP and registers an account. In another example, the user registers each account at each PSP via the unified payment interface. That is, the unified payment interface provides an interface in communication with each PSP and allows the user to register each account.

The selection of which PSP account to use for a pending transaction is made by the unified payment interface based on configured factors, such as the health of the routing mechanism associated with each PSP. For example, if one PSP is having network trouble, such as the computing system is not responding to communications, the unified payment interface selects the other PSP for a pending transaction. In another example, one PSP may be operational, but is responding slowly due to heavy traffic or having any other routing mechanism inefficiency. The unified payment interface recognizes the routing mechanism problems for the PSP and elects to conduct the transaction using the PSP that is not experiencing the mechanism problems.

The unified payment interface is able to use the provided user ID and any required verification information to conduct the transaction with the selected PSP. In an example, a single token has been associated with the user ID. The token may be provided by a primary PSP associated with the user, the unified payment interface itself, or any other suitable token provider. The token is provided to protect the actual account numbers of the user.

After the PSP is selected based on the health of the routing mechanisms, the transaction is conducted and the funds are transferred to the receiving PSP, merchant system, financial institution, or other suitable transaction counter-party. For example, the token is provided to a PSP that is receiving the transfer of funds to identify the transferring account without providing sensitive user account data. Thus, in the example, the token is associated with the selected PSP account and not only the PSP that provided the token.

In another example, a PSP is selected by the unified payment interface based on factors other than the health of the routing mechanism. For example, the unified payment interface monitors offers provided by the PSP, such as a transaction fee discount or a rebate. In another example, the stated cost per transaction is lower at one PSP than another. When one PSP has an offer that makes a transaction with that PSP more desirable, the unified payment interface elects to conduct a pending transaction with that PSP.

In another example, one PSP may have a faster speed or lower latency when conducting transactions. The unified payment interface may elect to conduct the transaction with the PSP having the faster speed or lower latency. The election may benefit the user because the transaction will be conducted faster. The election may benefit the unified payment interface or other parties involved in the transaction network because the transactions occur more efficiently and reduce congestion in the system.

In another example, each PSP associated with a user account has a different user ID. For example, the user may have four user IDs that are all associated with the same user account on the single unified payment interface, but are each associated with a different user PSP account. The user is able to specify the PSP account that is to be used for a transaction based on the user ID that is entered. For example, the user is able to access a single unified payment interface, enter a specific user ID, and conduct transactions with the PSP that is associated with that user ID.

The user may use the multiple user IDs to assist with managing the user accounts with each PSP. In an example, the user may use one PSP for personal transactions, one PSP for work transactions, and one PSP for household transactions. Based on the type of transaction, the user may provide that user ID to the unified payment interface.

In another example, the user may establish limits on certain accounts. For example, the user may configure one PSP with a limit on the amount of funds that may be transacted per month. If the limit is reached during a month, the unified payment interface will select an alternate PSP for transactions until the month has ended.

In another example, the unified payment interface may distribute the selection of PSPs equally among all registered PSPs. For example, if a user has four PSP accounts registered with the unified payment interface, the unified payment interface will rotate transactions among the PSPs until each PSP has conducted a transaction. Then the unified payment interface will start over at the first PSP. In this way, each PSP conducts substantially the same number of transactions in a given time period.

In another example, the unified payment interface will distribute the transactions such that the total amount of funds transacted will be substantially the same. For example, if one PSP conducts a particularly large transaction, then the unified payment interface will select a different PSP for a number of transactions until the total number of funds transacted is substantially equal.

In another example, a preferred or primary PSP is selected for transactions unless the health of the routing mechanism is below a threshold. That is, if the primary PSP health is acceptable, that PSP will be used for all transactions. The remaining PSPs will be used if the primary PSP routing mechanism becomes unstable or inefficient.

By using and relying on the methods and systems described herein, the unified payment interface provides a user the capability of conducting transactions with multiple PSPs from a single unified payment interface. As such, the systems and methods described herein enable the unified payment interface to distribute transactions between the PSP accounts of the user based on the health of the routing mechanism of each PSP. This allows the transactions to be conducted even when the user's primary PSP is not operating or is experiencing delays. As such, the system operates more efficiently for the user, the banking system, an associated merchant, or any other participant in the payment system. Computer systems are not unnecessarily attempting transactions with PSPSs that are not operative, which causes delays and abandoned transactions. Further, by using and relying on the methods and systems described herein, a user is able to better manage PSP accounts by employing multiple user IDs at a single unified payment interface. This allows the user to control spending on certain PSP accounts by configuring PSP rules.

### BRIEF DESCRIPTION OF THE DRAWINGS

Figure 1 is a block diagram depicting a system to provide a unified payment interface that enables multiple payment service providers to conduct transactions, in accordance with certain examples.
Figure 2 is a block flow diagram depicting a method to select service providers based on the health of routing mechanisms, in accordance with certain examples.
Figure 3 is a block diagram depicting a computing machine and module, in accordance with certain examples.

### EXAMPLE SYSTEM ARCHITECTURE

Turning now to the drawings, in which like numerals indicate like (but not necessarily identical) elements throughout the figures, examples are described in detail.

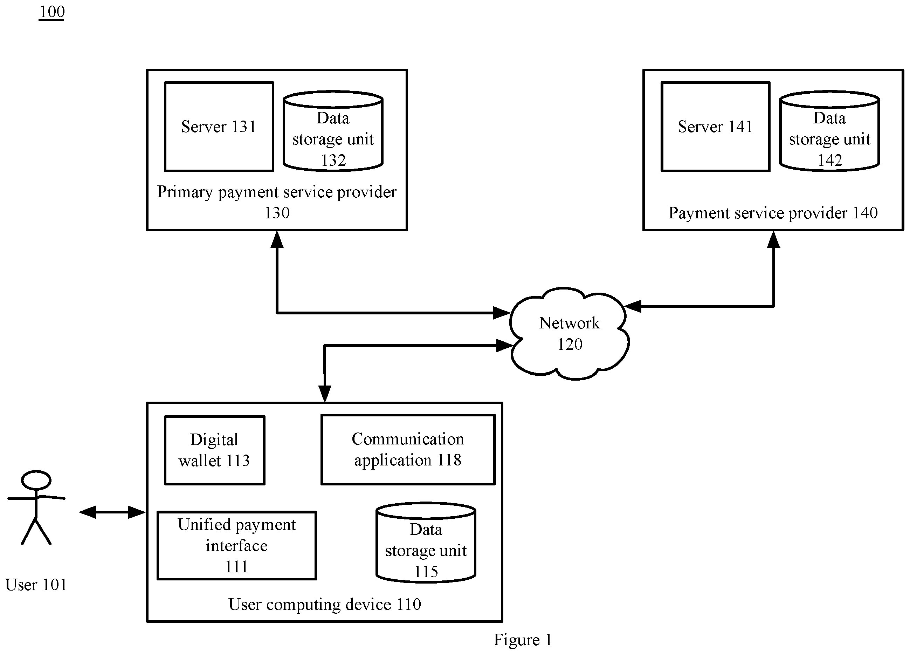

Figure 1 is a block diagram depicting a system 100 for transmitting, by a broadcasting computing device, an audio token to a user computing device and optionally receiving an audio token from a user computing device, in accordance with certain examples. As depicted in Figure 1, the system 100 comprises network computing devices 110, 130, and 140 that are configured to communicate with one another via one or more networks 120. In some embodiments, a user associated with a device must install an application and/or make a feature selection to obtain the benefits of the techniques described herein.

In examples, the network 120 can include a local area network ("LAN"), a wide area network ("WAN"), an intranet, an Internet, storage area network ("SAN"), personal area network ("PAN"), a metropolitan area network ("MAN"), a wireless local area network ("WLAN"), a virtual private network ("VPN"), a cellular or other mobile communication network, Bluetooth, Bluetooth low energy ("BLE"), near field communication ("NFC"), ultrasound communication, or any combination thereof or any other appropriate architecture or system that facilitates the communication of signals, data, and/or messages. Throughout the discussion of examples, it should be understood that the terms "data" and "information" are used interchangeably herein to refer to text, images, audio, video, or any other form of information that can exist in a computer-based environment.

Each network computing device 110, 130, and 140 includes a device having a communication module capable of transmitting and receiving data over the network 120. For example, each network computing device 110, 130, and 140 can include a server, desktop computer, laptop computer, tablet computer, a television with one or more processors embedded therein and / or coupled thereto, smart phone, handheld computer, personal digital assistant ("PDA"), video game device, wearable computing device, or any other wired or wireless, processor-driven device. In the example depicted in Figure 1, the network computing devices 110, 130, and 140 are operated by users 101, and primary PSP operators, and PSP operators, respectively.

An example user computing device 110 comprises a unified payment interface 111, a digital wallet 113, a data storage unit 115, and a communication application. The user computing device 110 communicates with an primary PSP 130 or the PSP 140 via the network 120.

The user 101 can use the communication application 118 on a user computing device 110, which may be, for example, a web browser application or a stand-alone application, to view, download, upload, or otherwise access documents or web pages via a distributed network 120. The communication application 118 can interact with web servers or other computing devices connected to the network 120, including the web server 134 of the primary PSP 130 or the web server 144 of the PSP 140.

In an example, the unified payment interface 111 enables the user 101 to interact with the user computing device 110 to access fund transfer options. For example, the unified payment interface 111 allows the user 101 to provide input and receive output on the user computing device 110 to configure the unified payment interface 111 or user IDs, enter user IDs, enter transaction details, select PSPs 130,140, or perform any other suitable tasks. The unified payment interface 111 may receive or create tokens suitable for conducting transactions related to one or more user accounts. The tokens may be associated with a single PSP 130, 140, or with multiple PSPs 130, 140.

The user computing device 110 may include a digital wallet application 113. The digital wallet application 113 may encompass any application, hardware, software, or process the user computing device 110 may employ to assist the user 101 in completing a purchase or other fund transfer. The digital wallet application 113 can interact with the communication application 118 or can be embodied as a companion application of the communication application 118. As a companion application, the digital wallet application 113 executes within the communication application 118. That is, the digital wallet application 113 may be an application program embedded in the communication application 118. In certain embodiments a digital wallet of the user 101 may reside in a cloud computing environment, on a merchant server, or in any other environment.

The user computing device 110 also includes a data storage unit 115 accessible by the digital wallet application 113, the communication application 112 or other applications. The example data storage unit 115 can include one or more tangible computer-readable storage devices. The data storage unit 115 can be stored on the user computing device 110 or can be logically coupled to the user computing device 110. For example, the data storage unit 115 can include on-board flash memory and/or one or more removable memory accounts or removable flash memory. In certain embodiments, the data storage unit 115 may reside in a cloud based computing system.

An example primary PSP 130 represents one or more of a credit card issuer, a bank, or other financial institution that is configured to transfer funds to another PSP (such as PSP 140) or receive funds. An example primary PSP 130 comprises a data storage unit 132, and a server 131. The primary PSP 130 communicates with another PSP 140 and a user computing device 110 via the network 120. The primary PSP 130 maintains an account of the user 101, and transmits funds from the user account and receives funds for the user PSP account. The primary PSP 130 may create tokens for the user account that may provide credentials to another PSP 140 or other financial institution.

The server 131 of the primary PSP 130 represents any computing device or system used to perform the functions of the primary PSP 130, such as configuring and maintaining user accounts, and transferring and receiving funds.

In an example, the data storage unit 132 comprises a local or remote data storage structure accessible to the broadcasting computing device 131 suitable for storing information. In an example, the data storage unit 132 stores encrypted information, such as HTML5 local storage.

An example PSP 140 represents one or more of a credit card issuer, a bank, or other financial institution that is configured to transfer funds to another PSP (such as PSP 130) or receive funds. An example PSP 140 comprises a data storage unit 142, and a server 141. The PSP 140 communicates with another PSP 140 and a user computing device 110 via the network 120. The PSP 140 maintains an account of the user 101, and transmits funds from the user account and receives funds for the user PSP account. The PSP 140 may create tokens for the user account that may provide credentials to another PSP (such as the primary PSP 130) or other financial institution.

The server 141 of the PSP 140 represents any computing device or system used to perform the functions of the PSP 140, such as configuring and maintaining user accounts, and transferring and receiving funds.

In an example, the data storage unit 142 comprises a local or remote data storage structure accessible to the broadcasting computing device 141 suitable for storing information. In an example, the data storage unit 142 stores encrypted information, such as HTML5 local storage.

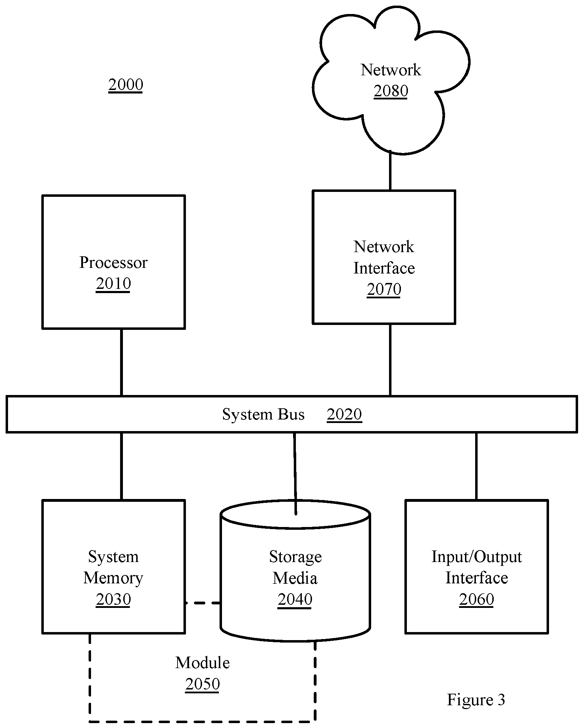

In examples, the network computing devices and any other computing machines associated with the technology presented herein may be any type of computing machine such as, but not limited to, those discussed in more detail with respect to Figure 3. Furthermore, any functions, applications, or components associated with any of these computing machines, such as those described herein or any others (for example, scripts, web content, software, firmware, hardware, or modules) associated with the technology presented herein may by any of the components discussed in more detail with respect to Figure 3. The computing machines discussed herein may communicate with one another, as well as with other computing machines or communication systems over one or more networks, such as network 120. The network 120 may include any type of data or communications network, including any of the network technology discussed with respect to Figure 3.

### Example Processes

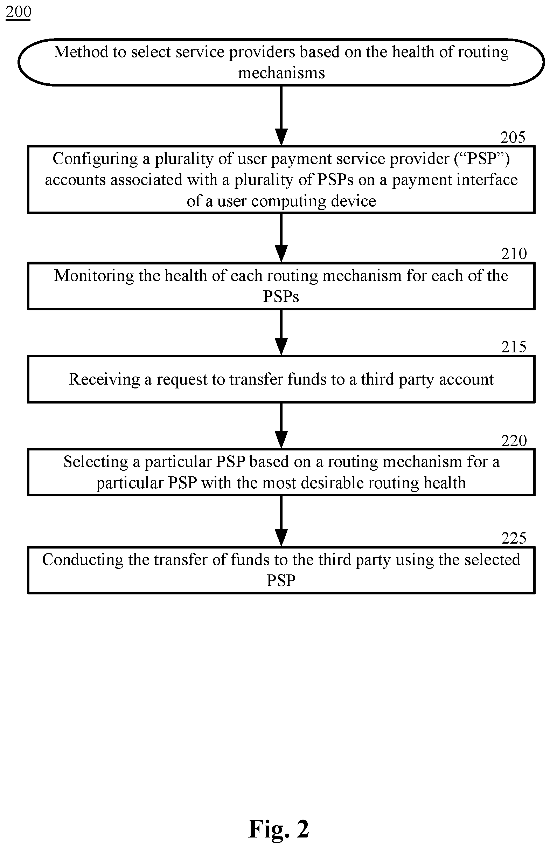

The example methods illustrated in Figure 2 is described hereinafter with reference to the components of the example operating environment 100. The example methods of Figure 2 may also be performed with other systems and in other environments.

Figure 2 is a block flow diagram depicting a method 200 to select service providers based on the health of routing mechanisms, in accordance with certain examples.

In block 205, a user 101 configures a plurality of user payment service provider ("PSP") accounts associated with a plurality of PSPs, such as 130 and 140, on a payment interface 111 of a user computing device 110. In an example, the user 101 configures one user ID on the unified payment interface 111 and associates multiple PSP accounts with the user ID. For example, the user 101 configures an account at two PSPs 130, 140. The user 101 only configures one user ID on the unified payment interface and associates both PSP accounts with the user ID. In certain examples, the user 101 registers a user account with each PSP 130, 140. For example, the user 101 navigates to a website of each PSP 130, 140 and registers an account. In another example, the user 101 registers each account at each PSP via the unified payment interface 111. That is, the unified payment interface 111 provides an interface in communication with each PSP 130, 140 and allows the user 101 to register each account.

In block 210, the unified payment interface 111 monitors the health of each routing mechanism for each of the PSPs 130, 140. The unified payment interface 111 monitors factors that affect the health of the routing mechanism, such as whether the connection is disabled, if the connection is operating slowly compared to others, if the PSP is not responding to communications, or any other suitable factors. In an example, the unified payment interface 111 may verify the health by periodically communicating a message to verify the route, monitoring reporting systems that report on route health, storing previous interactions with a route, or via any other suitable monitoring method.

In block 215, the unified payment interface 111 receives a request to transfer funds to a third party account. For example, the user 101 enters a request on the user interface of the unified payment interface 111. The request includes an identification of the third party recipient, an amount of funds, or any other suitable information.

In block 220, the unified payment interface 111 selects a particular PSP based on a routing mechanism for a particular PSP with the most desirable routing health. In an example, the routing mechanism to PSP 140 is healthier than PSP 130, so the unified payment interface 111 selects PSP 130. The selection of which PSP account to use for a pending transaction is made by the unified payment interface based on configured factors, such as the health of the routing mechanism associated with each PSP 130, 140. For example, if PSP 130 is having network trouble, such as the computing system is not responding to communications, the unified payment interface selects the PSP 140 for a pending transaction. In another example, PSP 130 may be operational, but is responding slowly due to heavy traffic or having any other routing mechanism inefficiency. The unified payment interface 111 recognizes the routing mechanism problems for the PSP 130 and elects to conduct the transaction using the PSP 140 that is not experiencing the mechanism problems.

In block 225, the unified payment interface 111 conducts the transfer of funds to the third party using the selected PSP 140. The unified payment interface 111 is able to use the provided user ID and any required verification information to conduct the transaction with the selected PSP 140. In an example, a single token has been associated with the user ID. The token may be provided by a primary PSP 130 associated with the user 101, the unified payment interface 111 itself, or any other suitable token provider. The token is provided to protect the actual account numbers of the user 101.

After the PSP 140 is selected based on the health of the routing mechanisms, the transaction is conducted and the funds are transferred to the receiving PSP 140, merchant system, financial institution, or other suitable transaction counter-party. For example, the token is provided to a PSP 140 that is receiving the transfer of funds to identify the transferring account without providing sensitive user account data. Thus, in the example, the token is associated with the selected PSP account and not only the PSP 130 that provided the token.

In an example, a method to select service providers based on the health of data routing mechanisms for each service provider includes configuring, by one or more computing devices, on an interface of a user computing device, a plurality of user service provider accounts associated with a plurality of service providers. The method includes monitoring, by one or more computing devices, a health of each routing mechanism for each of the plurality of service providers. The method includes receiving, by one or more computing devices and from the interface, a request to transfer electronic records to a particular third party account. The method includes selecting, by one or more computing devices, a particular service provider based on a routing mechanism for the particular service provider having a more desirable performance than a routing mechanism for each of the other service providers. The method includes conducting, by one or more computing devices, the transfer of electronic records using the selected service provider.

### Other Examples

Figure 3 depicts a computing machine 2000 and a module 2050 in accordance with certain examples. The computing machine 2000 may correspond to any of the various computers, servers, mobile devices, embedded systems, or computing systems presented herein. The module 2050 may comprise one or more hardware or software elements configured to facilitate the computing machine 2000 in performing the various methods and processing functions presented herein. The computing machine 2000 may include various internal or attached components such as a processor 2010, system bus 2020, system memory 2030, storage media 2040, input/output interface 2060, and a network interface 2070 for communicating with a network 2080.

The computing machine 2000 may be implemented as a conventional computer system, an embedded controller, a laptop, a server, a mobile device, a smartphone, a set-top box, a kiosk, a router or other network node, a vehicular information system, one more processors associated with a television, a customized machine, any other hardware platform, or any combination or multiplicity thereof. The computing machine 2000 may be a distributed system configured to function using multiple computing machines interconnected via a data network or bus system.

The processor 2010 may be configured to execute code or instructions to perform the operations and functionality described herein, manage request flow and address mappings, and to perform calculations and generate commands. The processor 2010 may be configured to monitor and control the operation of the components in the computing machine 2000. The processor 2010 may be a general purpose processor, a processor core, a multiprocessor, a reconfigurable processor, a microcontroller, a digital signal processor ("DSP"), an application specific integrated circuit ("ASIC"), a graphics processing unit ("GPU"), a field programmable gate array ("FPGA"), a programmable logic device ("PLD"), a controller, a state machine, gated logic, discrete hardware components, any other processing unit, or any combination or multiplicity thereof. The processor 2010 may be a single processing unit, multiple processing units, a single processing core, multiple processing cores, special purpose processing cores, coprocessors, or any combination thereof. According to certain embodiments, the processor 2010 along with other components of the computing machine 2000 may be a virtualized computing machine executing within one or more other computing machines.

The system memory 2030 may include non-volatile memories such as read-only memory ("ROM"), programmable read-only memory ("PROM"), erasable programmable read-only memory ("EPROM"), flash memory, or any other device capable of storing program instructions or data with or without applied power. The system memory 2030 may also include volatile memories such as random access memory ("RAM"), static random access memory ("SRAM"), dynamic random access memory ("DRAM"), and synchronous dynamic random access memory ("SDRAM"). Other types of RAM also may be used to implement the system memory 2030. The system memory 2030 may be implemented using a single memory module or multiple memory modules. While the system memory 2030 is depicted as being part of the computing machine 2000, one skilled in the art will recognize that the system memory 2030 may be separate from the computing machine 2000 without departing from the scope of the subject technology. It should also be appreciated that the system memory 2030 may include, or operate in conjunction with, a non-volatile storage device such as the storage media 2040.

The storage media 2040 may include a hard disk, a floppy disk, a compact disc read only memory ("CD-ROM"), a digital versatile disc ("DVD"), a Blu-ray disc, a magnetic tape, a flash memory, other non-volatile memory device, a solid state drive ("SSD"), any magnetic storage device, any optical storage device, any electrical storage device, any semiconductor storage device, any physical-based storage device, any other data storage device, or any combination or multiplicity thereof. The storage media 2040 may store one or more operating systems, application programs and program modules such as module 2050, data, or any other information. The storage media 2040 may be part of, or connected to, the computing machine 2000. The storage media 2040 may also be part of one or more other computing machines that are in communication with the computing machine 2000 such as servers, database servers, cloud storage, network attached storage, and so forth.

The module 2050 may comprise one or more hardware or software elements configured to facilitate the computing machine 2000 with performing the various methods and processing functions presented herein. The module 2050 may include one or more sequences of instructions stored as software or firmware in association with the system memory 2030, the storage media 2040, or both. The storage media 2040 may therefore represent examples of machine or computer readable media on which instructions or code may be stored for execution by the processor 2010. Machine or computer readable media may generally refer to any medium or media used to provide instructions to the processor 2010. Such machine or computer readable media associated with the module 2050 may comprise a computer software product. It should be appreciated that a computer software product comprising the module 2050 may also be associated with one or more processes or methods for delivering the module 2050 to the computing machine 2000 via the network 2080, any signal-bearing medium, or any other communication or delivery technology. The module 2050 may also comprise hardware circuits or information for configuring hardware circuits such as microcode or configuration information for an FPGA or other PLD.

The input/output ("I/O") interface 2060 may be configured to couple to one or more external devices, to receive data from the one or more external devices, and to send data to the one or more external devices. Such external devices along with the various internal devices may also be known as peripheral devices. The I/O interface 2060 may include both electrical and physical connections for operably coupling the various peripheral devices to the computing machine 2000 or the processor 2010. The I/O interface 2060 may be configured to communicate data, addresses, and control signals between the peripheral devices, the computing machine 2000, or the processor 2010. The I/O interface 2060 may be configured to implement any standard interface, such as small computer system interface ("SCSI"), serial-attached SCSI ("SAS"), fiber channel, peripheral component interconnect ("PCI"), PCI express (PCIe), serial bus, parallel bus, advanced technology attached ("ATA"), serial ATA ("SATA"), universal serial bus ("USB"), Thunderbolt, FireWire, various video buses, and the like. The I/O interface 2060 may be configured to implement only one interface or bus technology. Alternatively, the I/O interface 2060 may be configured to implement multiple interfaces or bus technologies. The I/O interface 2060 may be configured as part of, all of, or to operate in conjunction with, the system bus 2020. The I/O interface 2060 may include one or more buffers for buffering transmissions between one or more external devices, internal devices, the computing machine 2000, or the processor 2010.

The I/O interface 2060 may couple the computing machine 2000 to various input devices including mice, touch-screens, scanners, electronic digitizers, sensors, receivers, touchpads, trackballs, cameras, microphones, keyboards, any other pointing devices, or any combinations thereof. The I/O interface 2060 may couple the computing machine 2000 to various output devices including video displays, speakers, printers, projectors, tactile feedback devices, automation control, robotic components, actuators, motors, fans, solenoids, valves, pumps, transmitters, signal emitters, lights, and so forth.

The computing machine 2000 may operate in a networked environment using logical connections through the network interface 2070 to one or more other systems or computing machines across the network 2080. The network 2080 may include wide area networks (WAN), local area networks (LAN), intranets, the Internet, wireless access networks, wired networks, mobile networks, telephone networks, optical networks, or combinations thereof. The network 2080 may be packet switched, circuit switched, of any topology, and may use any communication protocol. Communication links within the network 2080 may involve various digital or an analog communication media such as fiber optic cables, free-space optics, waveguides, electrical conductors, wireless links, antennas, radio-frequency communications, and so forth.

The processor 2010 may be connected to the other elements of the computing machine 2000 or the various peripherals discussed herein through the system bus 2020. It should be appreciated that the system bus 2020 may be within the processor 2010, outside the processor 2010, or both. According to certain examples, any of the processor 2010, the other elements of the computing machine 2000, or the various peripherals discussed herein may be integrated into a single device such as a system on chip ("SOC"), system on package ("SOP"), or ASIC device.

In situations in which the systems discussed here collect personal information about users, or may make use of personal information, the users may be provided with an opportunity or option to control whether programs or features collect user information (e.g., information about a user's social network, social actions or activities, profession, a user's preferences, or a user's current location), or to control whether and/or how to receive content from the content server that may be more relevant to the user. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over how information is collected about the user and used by a content server.

Embodiments may comprise a computer program that embodies the functions described and illustrated herein, wherein the computer program is implemented in a computer system that comprises instructions stored in a machine-readable medium and a processor that executes the instructions. However, it should be apparent that there could be many different ways of implementing embodiments in computer programming, and the embodiments should not be construed as limited to any one set of computer program instructions. Further, a skilled programmer would be able to write such a computer program to implement an embodiment of the disclosed embodiments based on the appended flow charts and associated description in the application text. Therefore, disclosure of a particular set of program code instructions is not considered necessary for an adequate understanding of how to make and use embodiments. Further, those skilled in the art will appreciate that one or more aspects of embodiments described herein may be performed by hardware, software, or a combination thereof, as may be embodied in one or more computing systems. Moreover, any reference to an act being performed by a computer should not be construed as being performed by a single computer as more than one computer may perform the act.

The examples described herein can be used with computer hardware and software that perform the methods and processing functions described herein. The systems, methods, and procedures described herein can be embodied in a programmable computer, computer-executable software, or digital circuitry. The software can be stored on computer-readable media. For example, computer-readable media can include a floppy disk, RAM, ROM, hard disk, removable media, flash memory, memory stick, optical media, magneto-optical media, CD-ROM, etc. Digital circuitry can include integrated circuits, gate arrays, building block logic, field programmable gate arrays (FPGA), etc.

The example systems, methods, and acts described in the embodiments presented previously are illustrative, and, in alternative embodiments, certain acts can be performed in a different order, in parallel with one another, omitted entirely, and/or combined between different examples, and/or certain additional acts can be performed, without departing from the scope of various embodiments. Accordingly, such alternative embodiments are included in the scope of the following claims, which are to be accorded the broadest interpretation so as to encompass such alternate embodiments.

Although specific embodiments have been described above in detail, the description is merely for purposes of illustration. It should be appreciated, therefore, that many aspects described above are not intended as required or essential elements unless explicitly stated otherwise. Modifications of, and equivalent components or acts corresponding to, the disclosed aspects of the examples, in addition to those described above, can be made by a person of ordinary skill in the art, having the benefit of the present disclosure, without departing from the scope of embodiments defined in the following claims, the scope of which is to be accorded the broadest interpretation so as to encompass such modifications and equivalent structures.

## Claims

1. A method to select payment service providers for transactions, the method comprising:
configuring (205), by one or more computing devices, on a payment interface (111) of a user computing device (110), a plurality of user payment service provider ("PSP") accounts associated with a plurality of PSPs (130,140);
monitoring (210), by one or more computing devices, one or more factors of each routing mechanism for each of the plurality of PSPs;
receiving (215), by one or more computing devices and from the payment interface, a request to transfer funds to a particular third party account;
selecting (220), by one or more computing devices, a particular PSP based on a routing mechanism for the particular PSP having a more desirable performance than a routing mechanism for each of the other PSPs associated with the user PSP accounts, wherein the routing mechanism for the particular PSP is selected based on the particular PSP having less downtime than the routing mechanisms for each remaining PSP of the plurality of PSPs; and
conducting (225), by one or more computing devices, the transfer of funds using the selected PSP.

2. The method of claim 1, wherein the selection of the particular PSP is further based on the particular PSP providing a lower transaction cost than each remaining PSP of the plurality of PSPs.

3. The method of claim 1, wherein the selection of the particular PSP is further based on the particular PSP providing a higher rebate than each remaining PSP of the plurality of PSPs.

4. The method of claim 1, wherein the selection of the particular PSP is further based on a configured rotation between each of the plurality of PSPs.

5. The method of claim 1, further comprising registering, by one or more computing devices on a payment interface of a user computing device, each of the plurality of user PSP accounts.

6. The method of claim 1, wherein the particular PSP is a merchant system.

7. The method of claim 1, wherein the particular PSP is a financial institution, optionally wherein the particular PSP is a bank.

8. The method of claim 1, wherein the particular PSP is a credit card issuer.

9. The method of claim 1, wherein the payment interface is presented to a user on the user computing device.

10. The method of claim 1, wherein the payment interface receives display instructions from the one or more computing devices.

11. The method of claim 1, wherein the one or more computing devices is a computing system at a particular PSP.

12. A system (2000) to select payment service providers for transactions, the system comprising:
a storage device (2040);
a processor (2010) communicatively coupled to the storage device and an audio speaker, wherein the processor executes application code instructions that are stored in the storage device to cause the system to:
configure (205) on a payment interface (111) of a user computing device (110), a plurality of user payment service provider ("PSP") accounts associated with a plurality of PSPs (130, 140);
monitor (210)one or more factors of each routing mechanism for each of the plurality of PSPs;
receive (215), from the payment interface, a request to transfer funds to a particular third party account;
select (220) a particular PSP based on a routing mechanism for the particular PSP having a more desirable performance than a routing mechanism for each of the other PSPs the user PSP accounts, wherein the routing mechanism for the particular PSP is selected based on the particular PSP having less downtime than the routing mechanisms for each remaining PSP of the plurality of PSPs; and
conduct (225) the transfer of funds using the selected PSP.

13. The system of claim 12, wherein the application code instructions cause the system to perform the operations of any of the methods of claims 2 to 11.

14. A computer program product, comprising:
a non-transitory computer-readable medium having computer-executable program instructions embodied thereon that when executed by a processor selects payment service providers for transactions based on the health of payment routing mechanisms for each payment service provider, the computer-executable program instructions comprising:
computer-executable program instructions to configure (205) on a payment interface (111) of a user computing device (110), a plurality of user payment service provider ("PSP") accounts associated with a plurality of PSPs (130, 140);
computer-executable program instructions to monitor (210) one or more factors of each routing mechanism for each of the plurality of PSPs;
computer-executable program instructions to receive (215), from the payment interface, a request to transfer funds to a particular third party account;
computer-executable program instructions to select (220) a particular PSP based on a routing mechanism for the particular PSP having a more desirable performance than a routing mechanism for each of the other PSPs the user PSP accounts, wherein the routing mechanism for the particular PSP is selected based on the particular PSP having less downtime than the routing mechanisms for each remaining PSP of the plurality of PSPs; and
computer-executable program instructions to conduct (225) the transfer of funds using the selected PSP.

15. The computer program product of claim 14, wherein the computer-executable program instructions comprise instructions to perform the operations of any of the methods of claims 2 to 11.

## Patentansprüche

1. Verfahren zum Auswählen von Zahlungsdienstanbietern für Transaktionen, wobei das Verfahren Folgendes umfasst:
Konfigurieren (205) einer Vielzahl von Benutzer-Zahlungsdienstanbieter (payment service provider - "PSP")-Konten, die einer Vielzahl von PSP (130, 140) zugeordnet ist, durch eine oder mehrere Rechenvorrichtungen an einer Zahlungsschnittstelle (111) einer Benutzer-Rechenvorrichtung (110) ;
Überwachen (210) eines oder mehrerer Faktoren jedes Routingmechanismus für jeden der Vielzahl von PSP durch eine oder mehrere Rechenvorrichtungen;
Empfangen (215) einer Anforderung zum Überweisen von Geldbeträgen auf ein konkretes Drittkonto durch eine oder mehrere Rechenvorrichtungen und von der Zahlungsschnittstelle;
Auswählen (220) eines konkreten PSP durch eine oder mehrere Rechenvorrichtungen auf Grundlage eines Routingmechanismus für den konkreten PSP, der eine wünschenswertere Leistung aufweist als ein Routingmechanismus für jeden der anderen PSP, die den PSP-Benutzerkonten zugeordnet sind, wobei der Routingmechanismus für den konkreten PSP auf Grundlage dessen ausgewählt wird, dass der konkrete PSP weniger Ausfallzeiten aufweist als die Routingmechanismen für jeden verbleibenden PSP der Vielzahl von PSP; und
Durchführen (225) der Überweisung von Geldbeträgen durch eine oder mehrere Rechenvorrichtungen unter Verwendung des ausgewählten PSP.

2. Verfahren nach Anspruch 1, wobei die Auswahl des konkreten PSP ferner darauf basiert, dass der konkrete PSP geringere Transaktionskosten bereitstellt als jeder verbleibende PSP der Vielzahl von PSP.

3. Verfahren nach Anspruch 1, wobei die Auswahl des konkreten PSP ferner darauf basiert, dass der konkrete PSP einen höheren Rabatt bereitstellt als jeder verbleibende PSP der Vielzahl von PSP.

4. Verfahren nach Anspruch 1, wobei die Auswahl des konkreten PSP ferner auf einer konfigurierten Rotation zwischen jedem der Vielzahl von PSP basiert.

5. Verfahren nach Anspruch 1, ferner umfassend Registrieren jedes der Vielzahl von Benutzer-PSP-Konten durch eine oder mehrere Rechenvorrichtungen an einer Zahlungsschnittstelle einer Benutzer-Rechenvorrichtung.

6. Verfahren nach Anspruch 1, wobei es sich bei dem konkreten PSP um ein Händlersystem handelt.

7. Verfahren nach Anspruch 1, wobei es sich bei dem konkreten PSP um ein Finanzinstitut handelt, wobei es sich bei dem konkreten PSP optional um eine Bank handelt.

8. Verfahren nach Anspruch 1, wobei es sich bei dem konkreten PSP um einen Kreditkartenaussteller handelt.

9. Verfahren nach Anspruch 1, wobei die Zahlungsschnittstelle einem Benutzer auf der Benutzer-Rechenvorrichtung dargestellt wird.

10. Verfahren nach Anspruch 1, wobei die Zahlungsschnittstelle Anzeigeanweisungen von der einen oder den mehreren Rechenvorrichtungen empfängt.

11. Verfahren nach Anspruch 1, wobei es sich bei der einen oder den mehreren Rechenvorrichtungen um ein Rechensystem bei einem konkreten PSP handelt.

12. System (2000) zum Auswählen von Zahlungsdienstanbietern für Transaktionen, wobei das System Folgendes umfasst:
eine Speichervorrichtung (2040);
einen Prozessor (2010), der kommunikativ an die Speichervorrichtung und einen Lautsprecher gekoppelt ist, wobei der Prozessor Anwendungscodeanweisungen ausführt, die in der Speichervorrichtung gespeichert sind, um das System zu Folgendem zu veranlassen:
Konfigurieren (205) einer Vielzahl von Benutzer-Zahlungsdienstanbieter("PSP")-Konten, die einer Vielzahl von PSP (130, 140) zugeordnet ist, an einer Zahlungsschnittstelle (111) einer Benutzer-Rechenvorrichtung (110);
Überwachen (210) eines oder mehrerer Faktoren jedes Routingmechanismus für jeden der Vielzahl von PSP;
Empfangen (215) einer Anforderung zum Überweisen von Geldbeträgen auf ein konkretes Drittkonto von der Zahlungsschnittstelle;
Auswählen (220) eines konkreten PSP auf Grundlage eines Routingmechanismus für den konkreten PSP, der eine wünschenswertere Leistung aufweist als ein Routingmechanismus für jeden der anderen PSP der PSP-Benutzerkonten, wobei der Routingmechanismus für den konkreten PSP auf Grundlage dessen ausgewählt wird, dass der konkrete PSP weniger Ausfallzeiten aufweist als die Routingmechanismen für jeden verbleibenden PSP der Vielzahl von PSP; und
Durchführen (225) der Überweisung von Geldbeträgen unter Verwendung des ausgewählten PSP.

13. System nach Anspruch 12, wobei die Anwendungscodeanweisungen das System veranlassen, die Vorgänge eines der Verfahren der Ansprüche 2 bis 11 durchzuführen.

14. Computerprogrammprodukt, umfassend:
ein nicht-transitorisches computerlesbares Medium mit darauf enthaltenen computerausführbaren Programmanweisungen, die bei Ausführung durch einen Prozessor Zahlungsdienstanbieter für Transaktionen auf Grundlage des Zustands von Zahlungsroutingmechanismen für jeden Zahlungsdienstanbieter auswählen, wobei die computerausführbaren Programmanweisungen Folgendes umfassen:
computerausführbare Programmanweisungen zum Konfigurieren (205) einer Vielzahl von Benutzer-Zahlungsdienstanbieter("PSP")-Konten, die einer Vielzahl von PSP (130, 140) zugeordnet ist, an einer Zahlungsschnittstelle (111) einer Benutzer-Rechenvorrichtung (110);
computerausführbare Programmanweisungen zum Überwachen (210) eines oder mehrerer Faktoren jedes Routingmechanismus für jeden der Vielzahl von PSP;
computerausführbare Programmanweisungen zum Empfangen (215) einer Anforderung zum Überweisen von Geldbeträgen auf ein konkretes Drittkonto von der Zahlungsschnittstelle;
computerausführbare Programmanweisungen zum Auswählen (220) eines konkreten PSP auf Grundlage eines Routingmechanismus für den konkreten PSP, der eine wünschenswertere Leistung aufweist als ein Routingmechanismus für jeden der anderen PSP der PSP-Benutzerkonten, wobei der Routingmechanismus für den konkreten PSP auf Grundlage dessen ausgewählt wird, dass der konkrete PSP weniger Ausfallzeiten aufweist als die Routingmechanismen für jeden verbleibenden PSP der Vielzahl von PSP; und
computerausführbare Programmanweisungen zum Durchführen (225) der Überweisung von Geldbeträgen unter Verwendung des ausgewählten PSP.

15. Computerprogrammprodukt nach Anspruch 14, wobei die computerausführbaren Programmanweisungen Anweisungen zum Durchführen der Vorgänge eines der Verfahren der Ansprüche 2 bis 11 umfassen.

## Revendications

1. Procédé de sélection de fournisseurs de service de paiement pour des transactions, le procédé comprenant :
la configuration (205), par un ou plusieurs dispositifs informatiques, sur une interface de paiement (111) d'un dispositif informatique d'utilisateur (110), une pluralité de comptes de fournisseurs de service de paiement (« PSP ») d'utilisateur étant associés à une pluralité de PSP (130, 140) ;
la surveillance (210), par un ou plusieurs dispositifs informatiques, d'un ou plusieurs facteurs de chaque mécanisme de routage pour chacun de la pluralité de PSP ;
la réception (215), par un ou plusieurs dispositifs informatiques et depuis l'interface de paiement, d'une demande de transfert de fonds vers un compte tiers particulier ;
la sélection (220), par un ou plusieurs dispositifs informatiques, d'un PSP particulier sur la base d'un mécanisme de routage pour le PSP particulier ayant des performances plus souhaitables qu'un mécanisme de routage pour chacun des autres PSP associés aux comptes PSP d'utilisateur, dans lequel le mécanisme de routage pour le PSP particulier est sélectionné sur la base du fait que le PSP particulier présente un temps d'arrêt inférieur à celui des mécanismes de routage pour chaque PSP restant de la pluralité de PSP ; et
la réalisation (225), par un ou plusieurs dispositifs informatiques, du transfert de fonds à l'aide du PSP sélectionné.

2. Procédé selon la revendication 1, dans lequel la sélection du PSP particulier est également basée sur le fait que le PSP particulier fournit un coût de transaction inférieur à celui de chaque PSP restant de la pluralité de PSP.

3. Procédé selon la revendication 1, dans lequel la sélection du PSP particulier est également basée sur le fait que le PSP particulier fournit un remboursement supérieur à celui de chaque PSP restant de la pluralité de PSP.

4. Procédé selon la revendication 1, dans lequel la sélection du PSP particulier est également basée sur une rotation configurée entre chacune de la pluralité de PSP.

5. Procédé selon la revendication 1, comprenant également l'enregistrement, par un ou plusieurs dispositifs informatiques sur une interface de paiement d'un dispositif informatique d'utilisateur, de chacun de la pluralité de comptes PSP d'utilisateur.

6. Procédé selon la revendication 1, dans lequel le PSP particulier est un système marchand.

7. Procédé selon la revendication 1, dans lequel le PSP particulier est une institution financière, éventuellement dans lequel le PSP particulier est une banque.

8. Procédé selon la revendication 1, dans lequel le PSP particulier est un émetteur de cartes de crédit.

9. Procédé selon la revendication 1, dans lequel l'interface de paiement est présentée à un utilisateur sur le dispositif informatique de l'utilisateur.

10. Procédé selon la revendication 1, dans lequel l'interface de paiement reçoit des instructions d'affichage provenant du ou des dispositifs informatiques.

11. Procédé selon la revendication 1, dans lequel le ou les dispositifs informatiques sont un système informatique sur un PSP particulier.

12. Système (2000) pour sélectionner des fournisseurs de service de paiement pour des transactions, le système comprenant :
un dispositif de stockage (2040) ;
un processeur (2010) couplé en communication au dispositif de stockage et à une enceinte audio, dans lequel le processeur exécute des instructions de code d'application qui sont stockées dans le dispositif de stockage pour amener le système à :
configurer (205) sur une interface de paiement (111) d'un dispositif informatique d'utilisateur (110), une pluralité de comptes de fournisseurs de service de paiement (« PSP ») d'utilisateur étant associés à une pluralité de PSP (130, 140) ;
surveiller (210) un ou plusieurs facteurs de chaque mécanisme de routage pour chacun de la pluralité de PSP ;
recevoir (215), depuis l'interface de paiement, une demande de transfert de fonds vers un compte tiers particulier ;
sélectionner (220) un PSP particulier sur la base d'un mécanisme de routage pour le PSP particulier ayant des performances plus souhaitables qu'un mécanisme de routage pour chacun des autres PSP associés aux comptes PSP d'utilisateur, dans lequel le mécanisme de routage pour le PSP particulier est sélectionné sur la base du fait que le PSP particulier présente un temps d'arrêt inférieur à celui des mécanismes de routage pour chaque PSP restant de la pluralité de PSP ; et
réaliser (225) le transfert de fonds à l'aide du PSP sélectionné.

13. Système selon la revendication 12, dans lequel les instructions de code d'application amènent le système à effectuer les opérations de l'un quelconque des procédés selon les revendications 2 à 11.

14. Produit de programme informatique, comprenant :
un support non transitoire lisible par ordinateur sur lequel sont incorporées des instructions de programme exécutables par ordinateur qui, lorsqu'elles sont exécutées par un processeur, sélectionnent des fournisseurs de service de paiement pour des transactions sur la base de l'état des mécanismes de routage de paiement pour chaque fournisseur de service de paiement, les instructions de programme exécutables par ordinateur comprenant :
des instructions de programme exécutables par ordinateur pour configurer (205) sur une interface de paiement (111) d'un dispositif informatique d'utilisateur (110), une pluralité de comptes de fournisseurs de service de paiement (« PSP ») d'utilisateur associés à une pluralité de PSP (130, 140) ;
des instructions de programme exécutables par ordinateur pour surveiller (210) un ou plusieurs facteurs de chaque mécanisme de routage pour chacun de la pluralité de PSP ;
des instructions de programme exécutable par ordinateur pour recevoir (215), de l'interface de paiement, une demande de transfert de fonds vers un compte tiers particulier ;
des instructions de programme exécutable par ordinateur pour sélectionner (220) un PSP particulier sur la base d'un mécanisme de routage pour le PSP particulier présentant des performances plus souhaitables qu'un mécanisme de routage pour chacun des autres PSP associés aux comptes PSP d'utilisateur, dans lequel le mécanisme de routage pour le PSP particulier est sélectionné sur la base du fait que le PSP particulier présente un temps d'arrêt inférieur à celui des mécanismes de routage pour chaque PSP restant de la pluralité de PSP ; et
des instructions de programme exécutables par ordinateur pour réaliser (225) le transfert de fonds à l'aide du PSP sélectionné.

15. Produit programme informatique selon la revendication 14, dans lequel les instructions de programme exécutables par ordinateur comprennent des instructions pour effectuer les opérations de l'un quelconque des procédés selon les revendications 2 à 11.
